(19) Europäisches Patentamt
European Patent Office
Office européen des brevets

(11) Veröffentlichungsnummer: **0 184 763**
**A2**

(12) **EUROPÄISCHE PATENTANMELDUNG**

(21) Anmeldenummer: **85115366.8**

(51) Int. Cl.[4]: **C08G 81/02**

(22) Anmeldetag: **04.12.85**

(30) Priorität: **08.12.84 DE 3444787**

(43) Veröffentlichungstag der Anmeldung:
**18.06.86 Patentblatt 86/25**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**
Erfinder: **Mueller, Wolfgang F., Dr.**
**Hahnenweg 20**
**D-6730 Neustadt(DE)**
Erfinder: **Reffert, Rudi Wilhelm**
**Berliner Strasse 18**
**D-6711 Beindersheim(DE)**
Erfinder: **Bruessau, Rudolf, Dr.**
**Max-Beckmann-Strasse 8d**
**D-6710 Frankenthal(DE)**
Erfinder: **Seiler, Erhard, Dr.**
**Erpolzheimer Strasse 1**
**D-6700 Ludwigshafen(DE)**

(54) **Copolymere aus einer Hauptkette und Nebenketten.**

(57) Die Erfindung betrifft Copolymere mit Durchschnittsmolekulargewichten (Gewichtsmittel $\bar{M}_w$) von 10.000 bis 2 Millionen, die mindestens eine Struktureinheit der allgemeinen Formel

$$-(A)_n-(B)_m-(C)_p-(D)_q- \qquad I$$

(B mit seitenständigem $\underset{|}{O}$)

einpolymerisiert enthalten, die ein Polymeres (Hauptkette) aufbaut, und die ferner Gruppen der allgemeinen Formel

$-X-E$ II

(Nebenkette) aufweisen, wobei, jeweils bezogen auf das Copolymere, die Summe der Struktureinheiten I 5 bis 95 Gew.% ausmacht bei Durchschnittsmolekulargewichten von 2000 bis 1 Mio und wobei in der allgemeinen Formel I stehen für:

n, p und q: jeweils 0 oder ganze Zahlen

m: ganze Zahlen A: mindestens ein monovinylaromatisches Monomeres

B: mindestens eine zur Etherseiten-Gruppenbildung befähigte organische Monomereinheit

C: mindestens eine eine Nitrilgruppe aufweisende Monomereinheit

D: mindestens eine monoolefinische oder diolefinische Monomereinheit

und wobei ferner stehen für

X: den Rest eines mindestens bifuntionellen Kupplungsmittels ein durch anionische Polymerisation erzeugtes, mindestens eine

E: funktionelle Gruppe tragendes, Homo- oder Copolymerisat von Dienen mit 4 bis 6 C-Atomen.

Die Copolymeren werden verwendet zur Herstellung von Formteilen, z.B. auch nachdem sie mit anderen Polymeren vermischt worden sind.

EP 0 184 763 A2

# Copolymere aus einer Hauptkette und Nebenketten

Die Erfindung betrifft ein Copolymeres (Kammpolymeres) aus einer Hauptkette und Nebenketten, wobei letztere durch anionische Polymerisation erhaltene Polymere darstellen.

Durch anionische Polymerisation erhält man bekanntermaßen statistisch aufgebaute Copolymere oder aber Blockcopolymere. Diese werden als thermoplastische Massen oder als Elastomere eingesetzt.

Die Blockcopolymeren zeichnen sich durch Mikro-Domänenbildung aus, wie dies in A. Noshay, "Block Copolymers", Academic Press, New York, 1977, beschrieben ist. Innerhalb bestimmter Bereiche des Molekulargewichts und bestimmter Verhältnisse in der Zusammensetzung der Blöcke kann man elastomere Massen erhalten, die die Eigenschaft der "Selbstvulkanisation" durch Mikrodomänenbildung haben. Sowohl bei den durch anionische Polymerisation hergestellten Homo-, Co- als auch Block-Copolymerisaten wurde bisher konjugierten Dienen, wie Butadien, Isopren, gegebenenfalls hydriert, und vinylsubstituierten aromatischen Kohlenwasserstoffen wie Styrol, der Vorzug gegeben, da man bei der Verwendung anderer Monomerer offenbar keine Produkte mit anwendungstechnischen Eigenschaften bekommt, die in der Praxis eingesetzt werden können.

Durch die beschränkte Auswahl an Monomeren, wie konjugierten Dienen und vinylsubstituierten aromatischen Kohlenwasserstoffen weisen die Produkte keine ausreichende Chemikalienbeständigkeit, Alterungsbeständigkeit, Wärmeformbeständigkeit und niedrige mechanische Werte auf.

Es bestand daher die Aufgabe, die geschilderten Nachteile zu beheben. Die Lösung erfolgt durch Copolymere gemäß Patentanspruch 1.

Die Erfindung betrifft daher Copolymere mit Durchschnittsmolekulargewichten (Gewichtsmittel $\bar{M}_w$) von 10000 bis 2 Millionen, die mindestens eine Struktureinheit der allgemeinen Formel

$$-(A)_n-(\underset{\underset{|}{O}}{\underset{|}{B}})_m-(C)_p-(D)_q- \qquad \text{I}$$

einpolymerisiert enthalten, die ein Polymeres (Hauptkette) aufbaut, und die ferner Gruppen der allgemeinen Formel

- X - E II

(Nebenkette) aufweisen, wobei, jeweils bezogen auf das Copolymere, die Summe der Struktureinheiten I 5. bis 95 Gew.% ausmacht bei Durchschnittsmolekulargewichten von 2000 bis 1 Mio und wobei in der allgemeinen Formel I stehen für:

n, p und q: jeweils 0 oder ganze Zahlen

m: ganze Zahlen

A: mindestens ein monovinylaromatisches Monomeres

B: mindestens eine zur Etherseiten-Gruppenbildung befähigte organische Monomereinheit

C: mindestens eine eine Nitrilgruppe aufweisende Monomereinheit

D: mindestens eine monoolefinische oder diolefinische Monomereinheit
und wobei ferner stehen für

X: den Rest eines mindestens bifunktionellen Kopplungsmittels

E: ein durch anionische Polymerisation erzeugtes, mindestens eine funktionelle Gruppe tragendes, Homo- oder Copolymerisat von Dienen mit 4 bis 6 C-Atomen.

Diese Aufgabe wird somit durch Copolymere gelöst, die eine Hauptkette und als Seitenketten durch anionische Polymerisation erhaltene Homo- oder Copolymerisate enthalten. Bevorzugt sind Copolymere, bei denen die Polymerisate der Hauptkette zusätzlich zu einer monovinylaromatischen Monomereinheit weitere Monomereinheiten enthalten, die sich von unsubstituierten vinylaromatischen Monomereinheiten unterscheiden, wie (Meth)acrylnitril, (Meth)acrylsäureester und (Meth)acrylamide. Die durch anionische Polymerisation erhaltenen Polymeren der Seitenketten bestehen vorzugsweise aus Homo-, Co- und Block-Polymerisaten von konjugierten Dienen.

Die erfindungsgemäßen Pfropfpolymeren weisen durch die Variabilität der Monomeren in der Hauptkette vorteilhafte Eigenschaften auf.

Nachstehend wird der Aufbau der erfindungsgemäßen Copolymere und seiner wesentlichen Bestandteile, der Haupt- und Nebenketten beschrieben:

1. Das Copolymere

Das Copolymere weist Gesamtmolekulargewichte (alles in Gewichtsmittel $\bar{M}_w$ ) von 10.000 bis 2 Millionen, insbesondere von 40.000 bis 500.000 und bevorzugt von 40.000 bis 200.000 auf.

Die Molekulargewichte der Hauptkette, aufgebaut aus der Summe der Struktureinheiten I betragen 8.000 bis 1 Million, insbesondere 10.000 bis 100.000.

Die Molekulargewichte der Nebenketten ($\Sigma$ aller Ketten ohne Berücksichtigung von Resten des Abbruchmittels oder Kopplungsmittels) liegen im allgemeinen im Bereich von 2000 bis 1 Million, insbesondere von 2.000 bis 200.000 ($\Sigma$ Molgewichte der Hauptkette und Nebenkette = 100).

Das Copolymere enthält mindestens eine Hauptkette und mindestens eine Seitenkette; vorzugsweise enthält es eine Hauptkette und mehrere Seitenketten, insbesondere besteht es aus diesen (inclusive der Atome bzw. Atomgruppen zur Verknüpfung).

Die Hauptkette macht, jeweils bezogen auf das Copolymere, 5 bis 95 Gew.%, insbesondere 15 bis 85 Gew.% und sehr bevorzugt 25 bis 75 Gew.% (Rest $\Sigma$ der Nebenketten) aus.

2. Die Hauptkette

Die Hauptkette repräsentiert ein Polymeres oder Copolymeres das aus Struktureinheiten der allgemeinen Formel

$$-(A)_n-(\underset{\underset{|}{\overset{|}{O}}}{B})_m-(C)_p-(D)_q- \qquad \text{I}$$

aufgebaut ist. Diese Hauptkette ist mit den Polymeren oder Copolymeren der Nebenkette E über den Rest X eines mindestens bifunktionellen Kopplungsmittels $XL_Q$ (Q = mindestens 2) verbunden gemäß

$$-(A)_n-(\underset{\underset{X-E}{\overset{|}{O}}}{B})_m-(C)_p-(D)_q- \qquad \text{I}$$

In der allgemeinen Formel bedeuten:

A: eine einpolymerisierte vinylaromatische Einheit,

B: eine zur Etherseitengruppenbildung befähigte bzw. eine solche tragende einpolymerisierte organische Monomereinheit

C: eine einpolymerisierte Monomereinheit die Nitrilgruppen trägt und

D: eine einpolymerisierte Monomereinheit aus einem anderen organischen Monomeren als A, B und C.

Die Indices n, p und q stehen für Null oder eine ganze Zahl; m steht für eine ganze Zahl.

Die Laufzahlen können dabei z.B. drei oder mehr betragen, wobei zu beachten ist, daß das (Co)Polymerisat der Hauptkette durch das Molgewicht festgelegt ist.

Im einzelnen ist der Aufbau der Hauptkette durch die Teile der Struktureinheit wie folgt zu beschreiben:

A: Die in den polymeren Einheiten der Hauptkette

$$-(A)_n-(\underset{\underset{|}{\overset{|}{O}}}{B})_m-(C)_p-(D)_q- \qquad \text{I}$$

gegebenenfalls enthaltende Einheit A besteht aus mindestens einer einpolymerisierten monovinylaromatischen Monomereinheit, insbesondere der allgemeinen Formel

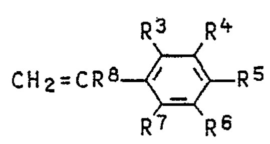

wobei $R^3$ bis $R^7$ = H, $C_1$- bis $C_4$-Alkyl, Halogen, CN oder $NO_2$ und $R^8$ = H oder $C_1$- bis $C_4$-Alkyl ist. Es sind aber auch andere substituierte vinylaromatische Monomere geeignet. Bevorzugt sind Monomere der obigen Formel, in denen $R^3$ bis $R^8$ = H oder Methyl, insbesondere H ist (Styrol). Die Monomeren der Einheit A enthalten keine Hydroxylgruppen. Die Einheit A ist in der polymeren Einheit der Hauptkette in Mengen von 0 bis 99, besonders bevorzugt von 50 bis 95 Gew.% enthalten. Der Gehalt (Laufzahl n) an Monomereneinheit A im Polymeren der Hauptkette ist insbesondere nur dann null, wenn die Einheit B sich von einem Hydroxylgruppen enthaltenden monovinylaromatischen Monomeren ableitet.

B: Die in den polymeren Einheiten der Hauptkette enthaltende Einheit B besteht aus mindestens einer eine Ethergruppe tragenden einpolymerisierten organischen Einheit. Diese Einheit leitet sich aus einem einpolymerisierten Hydroxylgruppen enthaltenden Monomer ab, das monoolefinisch ungesättigt ist. Diese Monomereinheit hat bevorzugt die Formel:

$$CH_2 = CR^9 - F - (OH)_r$$

wobei r = eine ganze Zahl größer als Null, $R^9$ = H oder $C_1$- bis $C_4$-Alkyl und F =

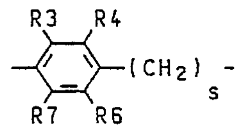

worin $R^3$ bis $R^7$ die bei A angegebene Bedeutung haben und s = 0, 1 oder 2 ist oder

$$F = -\underset{\underset{O}{\|}}{C} - O - G -$$

oder

$$F = -\underset{\underset{O}{\|}}{C} - NR^{10} - G -$$

ist, wobei G = ein $C_1$- bis $C_8$-Alkyliden oder Cyclohexyliden und $R^{10}$ = H oder $C_1$- bis $C_8$-Alkyl bedeutet oder

$$F = -CH_2-\underset{\underset{OH}{|}}{CH}-CH_2-$$

oder

$$-CH_2-\underset{\underset{Cl}{|}}{CH}-CH_2-$$

oder

$$G = -(CH_2)_j-O-[-\underset{\underset{O}{\|}}{C}(CH_2)_5-]_k-$$

wobei j = 2 bis 10 und k = 1 bis 10 ist

oder

$$G = -(CH_2-CH_2-O-)_h-CH_2-CH_2-$$

$$G = -(CH_2-\underset{\underset{CH_3}{|}}{CH}-O)_h-CH_2-\underset{\underset{CH_3}{|}}{CH}-$$

$$G = -(CH_2-CH_2-O-)_h-(CH_2-\underset{\underset{CH_3}{|}}{CH}-O-)_i-CH_2-\underset{\underset{R}{|}}{C}-$$

wobei h, i = 1, 2 oder größer 2 ist und R = H oder $CH_3$ ist oder Gemische der obigen Monomeren. Die Einheit B ist in der polymeren Einheit der Hauptkette in Mengen von 0,05 bis 70, bevorzugt in Mengen von 0,3 bis 20 Gew.% und insbesondere in Mengen von 0,3 bis 10 Gew.% enthalten.

C. Bei der in den polymeren Einheiten der Hauptkette gegebenenfalls vorhandenen Einheit C handelt es sich um einpolymerisierte, Nitrilgruppen enthaltende Monomere, wie (Meth)acrylnitril. Die Einheit C ist in der polymeren Einheit der Hauptkette in Mengen bis zu 45 %, bevorzugt von 8 bis 40 %, im besonderen von 20 bis 40 % enthalten.

D. Bei der in den polymeren Einheiten der Hauptkette gegebenenfalls vorhandenen Einheit D handelt es sich um mindestens ein einpolymerisiertes mono- oder diolefinisch ungesättigtes Monomeres, das keine Hydroxylgruppe enthält und das mit den den Einheiten A und B zugrundeliegenden Monomeren copolymerisierbar ist. Diese Einheit ist im Polymeren der Hauptkette in Mengen von bis zu 45 Gew.% enthalten. Die Prozentzahlen von A, B, C und D in der polymeren Einheit der Hauptkette müssen sich stets zu 100 addieren. Die Einheit D soll sich aus anderen organischen Monmomeren ableiten als die Einheit A, B und C.

Die Einheiten A, B, C und D können statistisch, d.h. beliebig über die Hauptkette verteilt, alternierend und/oder blockartig im Polymeren der Hauptkette verteilt sein. Derartige Anordnungen von Monomereinheiten in Copolymeren sind

bekannt, ebenso ist die Herstellung derartiger Polymerisate und Copolymerisate dem Fachmann geläufig.

3. Die Nebenketten

Die Nebenketten repräsentieren mindestens ein Polymeres oder Copolymeres E, das vorzugsweise durch anionische Polymerisation gewonnen wird.

Das durch anionische Polymerisation erhaltene (Co)Polymere E ist in der Regel über die Etherseitengruppe der Monomereinheit B mit der Hauptkette verbunden.

Das Kopplungsmittel kann verallgemeinert als $XL_Q$ (Q = mindestens 2, L = reaktionsfähige Gruppe) dargestellt werden. Es kann mit dem anionisch erzeugten Polymerisat E z.B. über mittels Abbruchagentien eingebrachte Gruppen, z.B. OH-Gruppen, nach dem Schema

$$E-OH + XL_Q \longrightarrow L_{Q-1}-X-O-E + L-H$$

umgesetzt werden.

Andererseits kann eine weitere reaktionsfähige Gruppe L des Kopplungsmittels mit einem oder einigen Etherseitengruppen der Bausteine B der Hauptkette umgesetzt werden gemäß

$$(B)_m - OH + L_{Q-1}X-E \longrightarrow (B)_m - O - X(L_{Q-2}) - E + HL$$

zu dem erfindungsgemäßen Copolymeren. Die Bedingungen sind dem Fachmann bekannt.

Bevorzugt ist es, daß das Polymere E über den Rest X einer mindestens bifunktionellen Kopplungseinheit mit der Hauptkette verbunden ist.

a) Das Kopplungsmittel $XL_Q$ leitet sich bevorzugt von einem mindestens bifunktionellen organischen oder anorganischen Säurederivat oder von mindestens bifunktionellen Alkylchlorsilanen ab. Insbesondere besteht der Rest des Kopplungsmittels aus:

$$-\underset{\displaystyle O}{\overset{}{\underset{\|}{C}}}-M-\underset{\displaystyle O}{\underset{\|}{C}}-$$

oder

$$-\underset{\displaystyle O}{\underset{\|}{C}}-NH-M-NH-\underset{\displaystyle O}{\underset{\|}{C}}-$$

wobei M = ein aliphatischer, olefinischer oder aromatischer Kohlenwasserstoffrest ist, oder aus

$$-\underset{\displaystyle O}{\underset{\|}{C}}-,\ -\underset{\displaystyle O}{\underset{\|}{C}}-\underset{\displaystyle O}{\underset{\|}{C}}-,\ -SO_2-,\ -POI-,\ -\overset{\displaystyle I}{\overset{|}{P}}-,\ -\overset{\displaystyle I}{\overset{|}{B}}-,\ -\underset{\displaystyle I}{\underset{|}{\overset{\displaystyle I}{\overset{|}{Si}}}}-[O-\underset{\displaystyle I}{\underset{|}{\overset{\displaystyle I}{\overset{|}{Si}}}}]_l$$

wobei I = Alkyl, Aryl, Aralkyl, Alkoxy, Aryloxy, Aralkoxy oder Halogen und l = null oder eine ganze Zahl z.B. auch größer als 3 ist.

Als Kopplungsmittel seien genannt: Adipinsäuredichlorid, Terephthalsäuredichlorid, Trimesoyldichlorid, Trimellithsäuredichlorid, Oxalsäuredichlorid, Pimelinsäuredichlorid, Glutarsäuredichlorid, Benzophenontetracarbonsäuredichlorid, Oxydiacetyldichlorid, Oxybenzoyldichlorid, Sebacindisäurechlorid und Azealinsäuredichlorid, außerdem Phosgen. Andere bevorzugte Kopplungsmittel sind Phosphor oder Schwefel enthaltende Säurehalogenide wie Sulforyldichlorid, Phosphoroxytrichlorid, Alkyl-, Aryl- und Arylalkylphosphordichloride, Alkyl-, Aryl- und Arylalkylphosphordichloride. Besonders geeignet sind auch Silicium enthaltende Säurechloride, beispielhaft seien genannt: Dialkyl-, -aryl- und -alkylaryldichlorsilane, Dialkoxy-, -aryloxy- oder arylalkyloxydichlorsilane, Methyltrichlorsilan, Ethyltrichlorsilan, Amyltrichlorsilan, Vinyltrichlorsilan, vorzugsweise jedoch Dimethyldichlorsilan. Die Kopplungsmittel können auch in Gemischen eingesetzt werden.

b) Das (Co)Polymere E

An das Kopplungsmittel $XL_Q$ ist ein durch anionische Polymerisation hergestelltes (Co)Polymeres E mit vorzugsweise einer funktionellen Gruppe gebunden. Als funktionelle Gruppen eignen sich Isocyanate, Halogene, Säuren bzw. Säurederivate, Epoxide, Phenole, Alkohole, Amine, Thiole und andere, der polymeranalogen Reaktion zugänglichen Gruppen an, wie dies in E.M. Fetters, "Chemical Reactions on Polymers", Interscience Publishers, New York, 1970, beschrieben ist. Anwendbar sind auch durch anionische Polymerisation hergestellte (Co)Polymere E, bei denen das bei Reaktion lebende Anion mit dem Kopplungsmittel $XL_Q$ direkt umgesetzt wird. Bevorzugt sind durch anionische Polymerisation hergestellte Polymere, die eine terminale primäre oder sekundäre Hydroxylgruppe tragen. Diese erhält man in an sich bekannter Weise durch Umsetzung des lebenden Anions mit Ethylenoxid, Propylenoxid oder einem Aldehyd, wie Propionaldehyd als Abbruchmittel.

Die durch anionische Polymerisation erhältlichen (Co)Polymeren E sind dem Fachmann bekannt. Besonders bevorzugt sind Polymere, die aus den Monomeren Butadien, Isopren oder 2,3-Dimethylbutadien oder deren Gemischen gebildet werden. Die anionische Polymerisation wird bekanntermaßen vorzugsweise durch Organo-Lithiumverbindungen, wie Butyl-Lithium, gestartet. Die anionischen Polymeren können gegebenenfalls hydrierte Homopolymere oder Copolymere sein. Die Copolymeren können dabei statistisch oder blockartig aufgebaut sein. Die blockartig aufgebauten Polymeren zeichnen sich durch anwendungstechnisch interessante Eigenschaften aus, da durch Ausbildung von Mikrodomänen z.B. thermoplastische Elastomere erhalten werden können.

Nachstehend werden die bevorzugten Ausführungsformen der Erfindung beschrieben.

Im besonderen sind solche Copolymere bevorzugt, bei denen sich die polymeren Einheiten der Hauptkette

$$-(A)_n-\underset{\underset{|}{O}}{\underset{|}{(B)}}{}_m-(C)_p-(D)_q- \qquad \text{I}$$

zusammensetzt, bezogen auf die Hauptkette $\Sigma$ = 100 Gew.%, aus:

A = 91 bis 60 Gew.% einer einpolymerisierten vinylaromatischen Einheit, vorzugsweise Styrol, $\alpha$-Methylstyrol und Vinyltoluol.

B = 0,3 bis 10 Gew.% einer Etherseitengruppen tragenden Einheit, vorzugsweise einem Hydroxyalkyl-(meth)acrylat und deren Amiden

C = 9 bis 40 Gew.% einer einpolymerisierten Nitril-Monomeren-Einheit, vorzugsweise Acrylnitril,

D = 0 bis 20 Gew.% einer einpolymerisierten Einheit aus einem anderen organischen Monomeren als A, B und C, vorzugsweise Methyl(meth)acrylsäureester, besonders bevorzugt Methyl(meth)acrylat.

Als Etherseitengruppen-tragende Einheiten B besonders geeignet sind Hydroxyethyl-(meth)acrylat, Hydroxypropyl-(meth)acrylat, Hydroxybutyl(meth)acrylat, Hydroxypentyl-(meth)acrylat, Hydroxyhexyl-(meth)acrylat, Hydroxydecyl-(meth)acrylat, Diethylenglykolmono-(meth)acrylat, Triethylenglykolmono-(meth)acrylat, Tetraethylenglykolmono-(meth)acrylat, Dipropylenglykolmono-(meth)acrylat, Tripropylenglykolmono-(meth)acrylat und außerdem Hydroxymethylstyrol; es können auch Gemische eingesetzt werden.

Bevorzugte (Co)Polymere E der Seitenkette sind die durch anionische Polymerisation erhaltenen Polymeren, die aus den Monomeren Butadien und/oder Isopren aufgebaut sind. Bevorzugt sind Polymerisate der allgemeinen Formel (III)

$$K-CH_2-CH_2-OH$$

oder

$$K-CH_2-\underset{\underset{OH}{|}}{CH}-CH_2-CH_3 \qquad \text{(III)}$$

wobei K ein durch anionische Polymerisation von 1,3-Dienen erhaltenes Polymerisat ist, wobei es sich um ein Homopolymerisat oder statistisch oder blockartig aufgebautes Copolymerisat handelt, wobei das Polymerisat teilweise oder soweit wie möglich hydriert sein kann. Bevorzugte 1,3-Diene sind Butadien, Isopren und 2,3-Dimethylbutadien.

Solche Polymere sind beispielsweise in M. Morton, "Anionic Polymerisation: Principles and Practice", Academic Press, New York 1983, S.147-164: "Organolithium Polymerisation of Dienes" beschrieben.

Zur Herstellung der erfindungsgemäßen (Co)Polymeren werden die Polymeren E der Nebenketten mit dem Polymeren (I) der Hauptkette umgesetzt.

Bevorzugte Kopplungsmittel $XL_Q$ sind Dimethylchlorsilan, Phosgen und Oxalylchlorid oder Gemische davon; bevorzugt wird jedoch ein Kopplungsmittel allein eingesetzt. Es kann auch ein mehrfunktionelles Kopplungsmittel wie Methyltrichlorsilan eingesetzt werden, gegebenenfalls allein oder im Gemisch mit Dimethyldichlorsilan.

Bevorzugt werden dabei die Polymeren der Seitenketten E zuerst mit dem Kopplungsmittel umgesetzt. Die Kopplungsmittel reagieren z.B. mit der Hydroxyl-Endgruppe des Polymeren E, anschließend wird mit dem Polymeren, d.h. der OH-Gruppe der Struktureinheit B der Hauptkette (I), umgesetzt.

Die Kopplungsreaktion kann in Lösung, Suspension, Schmelze oder in einer Mehrphasenreaktion, z.B. einer Zweiphasenreaktion, und bevorzugt unter Verwendung eines Säurefängers durchgeführt werden.

Vorzugsweise wird zur Kopplung in einem nichtreagierenden (inerten) Lösungsmittel gearbeitet, wie Cyclohexan, Toluol, Xylol, Trimethylbenzol, oder Tetrahydrofuran. Die Reaktion kann bevorzugt von -20°C bis 150°C durchgeführt werden. Die Reaktionstemperatur wird vorzugsweise nach Basenstärke des Säurefängers, Art des Kopplungsmittels und Siedepunkt des Lösungsmittels eingestellt.

Als Säurefänger eignen sich die bekannten, in der organischen Chemie üblichen Substanzen, wie Alkali- und Erdalkalihydroxide, Carbonate, tertiäre aliphatische und aromatische Amine, Stickstoff-enthaltende Heterocyclen und Ionenaustauscher. Bei der Verwendung von Phosgen als Kopplungsmittel ist Dimethylanilin bevorzugt. Die Polymeren werden in bekannter Weise aufgearbeitet.

Die erfindungsgemäßen Copolymeren können in der für Styrol-Dien-Block-polymerisate üblichen Weise mit vinylaromatischen Polymeren, wie niedermolekularen V inyltoluol-α-Methylstyrolpolymerisaten und aliphatischen Ölen oder Polybutadien- und Polyisopren-Ölen, außerdem mit niedermolekularen NBR-Ölen kombiniert werden.

Die erfindungsgemäßen Copolymeren können in der üblichen Weise modifiziert werden. Sie können daher z.B. Verstärkungs- und Füllstoffe, insbesondere Glasfasern, Flammschutzmittel, Stabilisatoren, Gleitmittel sowie Farbstoffe und Pigmente enthalten. Als Verstärkungsmittel können z.B. Glasfasern, Glaskugeln, Kaolin, Quarz, Glimmer, Wollastonit, Talkum, Asbest, Titandioxid, Aluminiumoxid, Mucovit, Kreide oder calciniertes Aluminiumsilikat eingesetzt werden.

Die erfindungsgemäßen Copolymeren weisen eine Vielfalt an Eigenschaften auf und zeigen eine Reihe von Vorteilen gegenüber bisher bekannten Blockund Pfropfpolymerisaten. Sie vereinigen die Vorzüge der Mikrophasenstrukturen von Blockpolymerisaten mit der Variabilität der Monomerenwahl bei den Pfropfpolymeren.

Die erfindungsgemäßen Copolymeren können auf herkömmlichen Maschinen durch Formblasen, Extrusion oder Spritzguß verarbeitet werden. Sie können als thermoplastische Kautschuke, Werkstoffe, Schmelzkleber, Verträglichmacher bei Polymerblends, Mineralöladditive und zur Herstellung photopolymerer Druckplatten eingesetzt werden. In Kombination mit anderen Thermoplasten können sie zur Verbesserung der Zähigkeit, der Fließeigenschaften und des Oberflächenbildes verwendet werden.

Die in den Beispielen und Versuchen beschriebenen Parameter wurden wie folgt bestimmt.

Das Gewichtsmittel des Molgewichts $\bar{M}_w$ wurde gemessen durch Gelpermeations-Chromatographie in 0.25 gew.%iger Tetrahydrofuranlösung bei 23°C und einer Durchflußgeschwindigkeit von 1,2 ml/min (vgl. G. Glöckner, "Polymercharakterisierung durch Flüssigkeits-Chromatographie", Verlag A. Hüttig, Heidelberg, 1982).

Für die Herstellung von erfindungsgemäßen Copolymeren werden die nachstehend beschriebenen Produkte verwendet.

A. Herstellung des Dien-Polymeren durch anionische Polymerisation und Umsetzung mit Abbruchmittel

In einem 10 l Rührkessel werden 5230 g Toluol und 1100 g Butadien unter $N_2$-Atmosphäre und unter Ausschluß jeglicher Feuchtigkeit vorgelegt und anschließend auf 45°C erwärmt. Zur Beseitigung von Verunreinigungen, die den metallorganischen Initiator (sek.-Butyllithium) zerstören, wird die Reaktionsmischung solange portionsweise (5 ml) mit dem Initiator (1,2 Gew.% sek.-Butyllithium in Pentan) versetzt, bis ein Temperaturanstieg um ca. 0,5°C das Einsetzen der Polymerisation anzeigt. Durch unverzügliche Zugabe von 200 mmol Initiator wird jetzt die Polymerisation gestartet, die Kesselheizung wird auf 60°C eingestellt. Unter diesen Bedingungen wird 1 h lang polymerisiert. Anschließend wird die Polymerisation durch Zugabe von 220 mmol Propylenoxid (5 %ig, gelöst in Toluol) abgebrochen. Das Molekulargewicht beträgt $\bar{M}_w$ = 6.100.

B. Herstellung des Dien-Polymeren durch anionische Polymerisation und Umsetzung mit Abbruchmittel

In einem 10 l Rührkessel werden 5230 g Toluol und 1050 g Isopren unter $N_2$-Atmosphäre und unter Ausschluß jeglicher Feuchtigkeit vorgelegt und anschließend auf 45°C erwärmt. Zur Beseitigung von Verunreinigungen, die den metallorganischen Initiator (sek.-Butyllithium) zerstören, wird die Reaktionsmischung solange portionsweise (5 ml) mit dem Initiator (1,2 Gew.% sek.-Butyllithium in Pentan) versetzt, bis ein Temperaturanstieg um ca. 0,5°C das Einsetzen der Polymerisation anzeigt. Durch unverzügliche Zugabe von 58 mmol Initiator wird die Polymerisation gestartet, die Kesselheizung wird auf 60°C eingestellt. Unter diesen Bedingungen wird 1 h lang polymerisiert. Anschließend wird die Polymerisation durch Zugabe von 65 mmol Propylenoxid (5 %ig gelöst in Toluol) abgebrochen. Das Molekulargewicht wurde bestimmt zu $\bar{M}_w$ = 18.000.

C. Herstellung des Dien-Copolymeren durch anionische Polymerisation unter Abbruch

In einem 10 l Rührkessel werden 5230 g Toluol und 1000 g Butadien unter $N_2$-Atmosphäre und unter Ausschluß jeglicher Feuchtigkeit vorgelegt und anschließend auf 45°C erwärmt. Zur Beseitigung von Verunreinigungen, die den metallorganischen Initiator (sek.-Butyllithium) zerstören, wird die Reaktionsmischung solange portionsweise (5 ml) mit dem Initiator (1,2 Gew.% sek.-Butyllithium in Pentan) versetzt, bis ein Temperaturanstieg um ca. 0,5°C das Einsetzen der Polymerisation anzeigt. Durch unverzügliche Zugabe von 120 mmol Initiator wird jetzt die Polymerisation gestartet, die Kesselheizung wird auf 60°C eingestellt. Unter diesen Bedingungen wird 1 h lang polymerisiert. Anschließend wird 700 g Isopren zugegeben und 1 weitere h polymerisiert. Man setzt 140 mmol Propylenoxid zu (5 %ig gelöst in Toluol). Das Molekulargewicht wurde bestimmt zu $\bar{M}_w$ = 10.400.

D. Herstellung des Dien-Polymeren durch anionische Polymerisation unter Abbruch und Hydrierung

In einem 10 l Rührkessel werden 5230 g Toluol und 1000 g Butadien unter $N_2$-Atmosphäre und unter Ausschluß jeglicher Feuchtigkeit vorgelegt und anschließend auf 45° erwärmt. Zur Beseitigung von Verunreinigungen, die den metallorganischen Initiator (sek.-Butyllithium) zerstören, wird die Reaktionsmischung solange portionsweise (5 ml) mit dem Initiator (1,2 Gew.% sek.-Butyllithium in Pentan) versetzt, bis ein Temperaturanstieg um ca. 0,5°C das Einsetzen der Polymerisation anzeigt. Durch unverzügliche Zugabe von 110 mmol Initiator wird jetzt die Polymerisation gestartet, die Kesselheizung wird auf 60°C eingestellt. Unter diesen Bedingungen wird 1 h lang polymerisiert. Anschließend wird die Polymerisation durch Zugabe von Propylenoxid (5 %ig gelöst in Toluol) abgebrochen. Das

Polymere wies ein $\bar{M}_w$ von 11.300 auf und wird anschließend hydriert. Dazu setzt man als Hydrierkatalysator eine Mischung aus 1,3 g Ni-II-acetylacetonat, 35 g Toluol und 20,6 g Al-trisisobutyllösung (20 %ig in Hexan) zu und hydriert bei 80°C und 15 bar $H_2$-Druck. Nach 3 Stunden beträgt der Restgehalt an olefinischen Doppelbindungen weniger als 2 % (bestimmt nach Wijs mit Jodchlorid-Lösung).

Die Erfindung wird nachstehend anhand von Beispielen näher erläutert.

Beispiel 1

Herstellung eines Copolymeren

100 g des vorstehend beschriebenen Produktes A und 2,6 g Triethylamin in 800 ml Toluol werden unter Stickstoff zu einer Lösung von 6,5 g Dimethyldichlorsilan in 100 ml Toluol bei 60°C in 30 min zugetropft. Man rührt 1 h bei 70°C nach. Der Überschuß an Dimethyldichlorsilan wird destillativ entfernt. Die Lösung von 140 g eines Styrolcopolymerisats (bestehend aus 70 Gew.% Styrol, 25 Gew.% Acrylnitril und 5 Gew.% Hydroxybutylacrylat, hergestellt durch kontinuierliche radikalische Polymerisation, mit einem $\bar{M}_w$ = 65.000. Dazu werden 100 Teile des Monomerengemisches mit 30 Teilen Ethylbenzol kontinuierlich in einen Kessel gefahren und gleichzeitig die gleiche Menge kontinuierlich entnommen, wobei das Gemisch eine mittlere Verweilzeit von 5 h hat und bei 150° und 9 bar thermisch ohne Starterzusatz polymerisiert wird. Das Gemisch wird über einen Extruder entgast, das Polymere granuliert.) und 4,1 g Triethylamin in 1300 ml Toluol und 200 ml DMF zugetropft. Man läßt 2 h bei Rückfluß nachreagieren und gießt die Mischung in Methanol. Das ausgefallene Polymere wird abgesaugt und getrocknet. Das Molekulargewicht betrug $\bar{M}_w$ = 121.000.

Beispiel 2

Herstellung eines Copolymeren aus Haupt- und Nebenkette

100 g Isopren-Copolymere B und 2,0 g Triethylamin in 1000 ml Toluol werden unter Stickstoff zu einer Lösung von 4,1 g Dimethyldichlorsilan in 100 ml Toluol bei 60°C in 30 min zugetropft. Man rührt 1 h bei 70°C nach. Der Überschuß an Dimethyldichlorsilan wird destillativ entfernt. Die Lösung wird bei 70°C in 15 min zu einer Lösung von 60 g eines Styrolcopolymerisats gemäß Beispiel 1 und 4,0 g Triethylamin in 700 ml Toluol und 100 ml DMF zugetropft. Man läßt 2 h bei Rückfluß nachreagieren und gießt die Mischung in Methanol. Das ausgefallene Polymere wird abgesaugt und getrocknet. Das Molekulargewicht betrug $\bar{M}_w$ = 108.000).

Beispiel 3

Herstellung eines Copolymeren

100 g des Butadien-Isopren-Blockpolymeren C und 4,0 g Triethylamin in 1000 ml Toluol werden unter Stickstoff zu einer Lösung von 4,1 g Dimethyldichlorsilan in 100 ml Toluol bei 60°C in 30 min zugetropft. Man rührt 1 h bei 70°C nach. Der Überschuß an Dimethyldichlorsilan wird destillativ entfernt. Die Lösung wird bei 70°C in 15 min zu einer Lösung von 200 g eines Styrolcopolymerisats (bestehend aus 65 Gew.% Styrol, 32,5 Gew.% Acrylnitril und 2,5 Gew.% Hydroxyethylacrylat, hergestellt durch kontinuierliche radikalische Polymerisation gemäß Beispiel 1, aber bei 142°C, mit einem $\bar{M}_w$ = 80.000) und 4,0 g Triethylamin in 2000 ml Toluol und 200 ml DMF zugetropft. Man läßt 2 h bei Rückfluß nachreagieren und gießt die Mischung in Methanol. Das ausgefallene Polymere wird abgesaugt und getrocknet. Das Molekulargewicht beträgt $\bar{M}_w$ = 245.000.

Beispiel 4

Herstellung eines Copolymeren

100 g des hydrierten Polymeren D und 4,0 g Triethylamin in 1000 ml Toluol werden unter Stickstoff zu einer Lösung von 4,1 g Dimethyldichlorsilan in 100 ml Toluol bei 60°C in 30 min zugetropft. Man rührt 1 h bei 70°C nach. Der Überschuß an Dimethyldichlorsilan wird destillativ entfernt. Die Lösung wird bei 70°C in 15 min zu einer Lösung von 50 g eines Styrolcopolymerisats (bestehend aus 65 Gew.% p-Methylstyrol, 32,5 Gew.% Acrylnitril und 2,5 Gew.% Hydroxyethylacrylat, hergestellt durch kontinuierliche radikalische Polymerisation gemäß Beispiel 3, mit einem $\bar{M}_w$ = 86.000) und 4,0 g Triethylamin in 500 ml Toluol und 50 ml DMF zugetropft. Man läßt 2 h bei Rückfluß nachreagieren und arbeitet auf. Das Molekulargewicht $\bar{M}_w$ = 140.000.

**Ansprüche**

1. Copolymere mit Durchschnittsmolekulargewichten (Gewichtsmittel $\bar{M}_w$) von 10.000 bis 2 Millionen, die mindestens eine Struktureinheit der allgemeinen Formel

$$-(A)_n-\underset{\substack{|\\ O\\ |}}{(B)}_m-(C)_p-(D)_q- \qquad I$$

einpolymerisiert enthalten, die ein Polymeres (Hauptkette) aufbaut, und die ferner Gruppen der allgemeinen Formel

-X - E II

(Nebenkette) aufweisen, wobei, jeweils bezogen auf das Copolymere, die Summe der Struktureinheiten I 5 bis 95 Gew.% ausmacht bei Durchschnittsmolekulargewichten von 2000 bis 1 Mio und wobei in der allgemeinen Formel I stehen für:

n, p und q: jeweils 0 oder ganze Zahlen

m: ganze Zahlen

A: mindestens ein monovinylaromatisches Monomeres

B: mindestens eine zur Etherseiten-Gruppenbildung befähigte organische Monomereinheit

C: mindestens eine eine Nitrilgruppe aufweisende Monomereinheit

D: mindestens eine monoolefinische oder diolefinische Monomereinheit

und wobei ferner stehen für

X: den Rest eines mindestens bifunktionellen Kupplungsmittels

E: ein durch anionische Polymerisation erzeugtes, mindestens eine funktionelle Gruppe tragendes, Homo- oder Copolymerisat von Dienen mit 4 bis 6 C-Atomen.

2. Copolymere, bestehend aus Struktureinheiten I und Gruppen der Formel II.

3. Copolymere nach Anspruch 1, dadurch gekennzeichnet, daß die Hauptkette I einpolymerisiert enthält, jeweils bezogen auf diese,

bis zu 99 Gew.% der Monomeren A,

0,05 bis 70 Gew.% der Monomereinheit B,

bis zu 45 Gew.% der Monomereinheit C

und

bis zu 45 Gew.% der Monomereinheit D.

4. Copolymere nach Anspruch 1, dadurch gekennzeichnet, daß die Hauptkette I einpolymerisiert enthält, jeweils bezogen auf diese, 50 bis 95 Gew.% der Monomeren A, 0,3 bis 20 Gew.% der Monomereinheit B und 8 bis 40 Gew.% der Monomereinheit C.

5. Copolymere nach Anspruch 4, dadurch gekennzeichnet, daß die Hauptkette einpolymerisiert enthält ($\Sigma = 100$)

60 bis 91 Gew.% Styrol, $\alpha$ -Methylstyrol oder Vinyltoluol oder binäre oder ternäre Mischungen davon als Monomeres A,

0,3 bis 10 Gew.% Hydroxyalkyl-(meth)acrylat mit 1 bis 8 C-Atomen im Alkylrest als Monomereinheit B,

und

9 bis 40 Gew.% Acrylnitril als Monomereinheit C.

6. Copolymere nach Anspruch 5, dadurch gekennzeichnet, daß der Anteil der Hauptkette 25 bis 75 Gew.% und der der Nebenkette 75 bis 25 Gew.% ausmacht und die Hauptkette 60 bis 79 Gew.% Styrol, 1 bis 8 Gew.% Hydroxyethylacrylat und 20 bis 40 Gew.% Acrylnitril einpolymerisiert enthält und die Nebenkette im wesentlichen durch anionische Polymerisation mit Li-Alkylen erzeugte, gegebenenfalls hydrierte Polymerisate von Butadien, Isopren oder Dimethylbutadien oder Copolymerisate von Gemischen aus diesen Dienen darstellen.

7. Verfahren zur Herstellung von Copolymeren gemäß Ansprüchen 1 bis 6 durch Umsetzen von durch anionische Polymerisation erzeugten Homo-oder Copolymerisaten von Dienen mit 4 bis 6 C-Atomen (als Seitenkette), wobei die lebenden Anionen zunächst, gegebenenfalls mit funktionelle Gruppen bildenden Abbruchmitteln umgesetzt worden sind, mit mindestens einem mindestens 2 funktionelle Gruppen aufweisenden Kopplungsmittel ($XL_Q$, Q = mindestens 2) in Gegenwart eines inerten Lösungsmittels bei Temperaturen von -20°C bis 150°C, gegebenenfalls in Anwesenheit eines die Abspaltung, des aus den funktionellen Gruppen $L_Q$ des Kopplungsmittels und des aus dem anionisch erzeugten Homo- oder Copolymerisat oder den Resten des Abbruchmittels zu bildenden Moleküls, begünstigenden Mittels, und daran anschließende Umsetzung des Reaktionsproduktes $L_{Q-1}$-X-E mit dem Polymerisat der Hauptkette I und üblicher Gewinnung des Reaktionsproduktes.

8. Verwendung von Copolymeren gemäß Anspruch 1 zur Herstellung von Mischungen mit anderen Polymeren.

9. Verwendung von Copolymeren gemäß Ansprüchen 1 und 8 zur Herstellung von Formteilen.

10. Formteil aus Copolymeren gemäß Anspruch 9.